# EUROPEAN PATENT APPLICATION

(11) **EP 4 647 412 A1**
(43) Date of publication of application: **12.11.2025**
(21) Application number: 25174839.8
(22) Date of filing: 07.05.2025
(51) Int. Cl.: C04B 35/634, C04B 35/80, B32B 18/00

(54) **THERMOFORMING OF A THERMOPLASTIC-BASED PREPREG IN CERAMIC MATRIX COMPOSITE PREFORMING**

(30) Priority: 10.05.2024 US 202463645485 P
(71) Applicant: RTX Corporation, Farmington, CT 06032 (US)
(72) Inventor: RIEHL, John D., Hebron, 06248 (US); SUDRE, Olivier H., Glastonbury, 06073 (US); KONOPASKE, Zachary Paul, West Hartford, 06107 (US); LENZ, Brendan, North Branford, 06471 (US); PARIKH, Nil, Newington, 06111 (US); LAZUR, Andrew J., Farmington, 06032 (US)
(74) Representative: Dehns

(57) **Abstract**

A dry prepreg (50) of fibrous textile (10)/thermoplastic (20) with handling characteristics highly compatible with robotic handling and a method for making at least one dry prepreg (50) and forming the at least one dry prepreg (50) over a mold form. The method also includes using the at least one molded dry prepreg (50) as at least one sub-laminate in a thermoforming process. The methods include CMC preforming processes which can be automated though the use of robotic handling devices (150).

## Description

### FIELD OF THE INVENTION

The subject matter disclosed herein relates to ceramic matrix composite (CMC) preforms and, in particular, to the expansion of automation of the CMC preforming processes though the production and use of a fibrous textile/thermoplastic prepreg with handling characteristics highly compatible with robotic handling methods and permit automated thermoforming into a desired mold. This application also relates to the production of dry thermoplastic prepregs for use in thermoforming CMC preprocessing.

### BACKGROUND OF THE INVENTION

CMC's are costly to produce and a large driver of this cost is the preforming process for the relevant material. For example, the preforming process can account for up to 50% of the product cost when making certain parts. The preforming process includes, for example, the subprocesses of prepregging, cutting and kitting of plies, layup, and iterative debulking and solvent removal steps.

These subprocesses involve a high amount of touch labor which increases the overall cost of the preforming process. Therefore, one way to reduce the cost of the preforming process is to introduce automation. For example, robotic handling devices which can pick-and-place the relevant materials is one way to introduce automation to a composite manufacturing process. Pick-and-place systems enable automated material handling and layup, which are well-established in the composites industry. The success of a pick and place approach is heavily dependent on the handling characteristics of the prepreg material.

Therefore, there is an unrealized need for a material which can enable an automated preforming process and a thermoforming process of sub-laminates into a final article which is a completely or at least mostly an automated process.

The above information disclosed in this Background section is only for understanding of the background of the inventive concepts and, therefore, it may contain information that does not constitute prior art.

### SUMMARY OF THE INVENTION

The present disclosure is directed, in a first aspect, to a prepreg is provided where the prepreg includes a fibrous textile, and a thermoplastic resin mixture which impregnates the fibrous textile. The thermoplastic resin mixture includes 5 wt% to 30 wt% polyvinyl butyral and less than 5% percent of a solvent.

The fibrous textile may be a woven fabric, non-woven fabric, or tows. The fibrous textile may more specifically be a unidirectional tape, a 2-dimensional woven fabric, a 3-dimensional woven fabric, a 2-dimensional braided fabric, and a 3-dimensional braided fabric.

The fibrous textile may include fibers of silicon carbide (SiC), carbon (C), silicon oxycarbide (SiOC), silicon nitride (Si3N4), silicon carbonitride (SiCN), hafnium carbide (HfC), tantalum carbide (TaC), silicon borocarbide (SiBC), silicon borocarbonitride (SiBCN), Zirconium carbide (ZrC), silicon aluminum carbon nitride (SiAlCN), silica, alumina, mullite, garnet, aluminosilicate, arimad fiber, spectra, or basalt.

The thermoplastic may be polyvinyl butyral (PVB), Polylactic acid (PLA), Acrylonitrile butadiene styrene (ABS), Polyvinyl chloride (PVC), polyvinyl alcohol (PVA), and Acrylonitrile styrene acrylate (ASA).

In some embodiments, the thermoplastic is PVB and the fibrous textile is comprised of ceramic fiber tows. In some embodiments, the thermoplastic is PVB and the fibrous textile is comprised of SiC fiber tows.

The solvent may be an alcohol solvent, for example, ethanol. The solvent may also be, for example, acetic acid, acetone, methanol, ethanol, 2-propanol, butanol, 2-butoxyethanol, cyclohexanone, benzyl alcohol, 1-methoxy-propanol-2, butyl glycol, n-butyl acetate, ethyl acetate, N,N-dimethylacetamide (DMA), N,N-dimethylformamide (DMF), N,N-dimethylsulfoxide (DMSO), N-methylpyrrolidone (NMP), and tetrahydrofurane (THF).

In some examples, a stack of prepreg plies is provided. The stack of prepreg plies may be joined together by intermingling of the PVB resin of adjacent prepreg plies in the stack.

The present disclosure is also directed, in a second aspect, to a method for making a prepreg is provided. The method combines a fibrous textile with a thermoplastic resin mixture wherein the thermoplastic resin mixture includes 15 wt% to 60 wt% of a thermoplastic, and at least 30 wt% of a solvent, and removing the solvent from the combined fibrous textile with a thermoplastic resin mixture wherein the remaining wt% of solvent is less than 5%, to form at least one dry prepreg.

The thermoplastic used in the method may be PVB and the fibrous textile may include SiC fiber tows. The solvent used may be an alcohol solvent, for example, ethanol.

In some examples of the method, at least two dry prepregs plies are formed and are stacked on top of each other.

The method may additionally include positioning the at least one dry prepreg ply in a mold form with a predetermined interior shape, and molding the at least one dry prepreg ply by applying heat and pressure to the at least one dry prepreg ply within the mold form at least until the dry prepreg adopts the predetermined interior shape of the mold form. The heat applied may be at a temperature of 70C° to 260C°.

The method may additionally include cooling the dry prepreg with the mold form, and removing the dry prepreg from the mold form after the dry prepreg has cooled to less than 70C° to form a molded article.

The method may additionally include positioning at least two stacked dry prepreg plies in a mold form with a predetermined interior shape, and molding the stacked dry prepreg plies by applying heat and pressure to the stacked dry prepreg plies within the mold form until the dry prepreg plies adopt the predetermined interior shape of the mold form.

The present disclosure is further directed, in a third aspect, to a method for thermoforming together at least two dry prepreg plies is provided. The at least two dry prepreg plies each include, a fibrous textile, and a thermoplastic resin mixture, which impregnates the fibrous textile. The thermoplastic resin mixture includes 5 wt% to 30 wt% polyvinyl butyral and less than 5% percent of a solvent.

The thermoforming method includes heating the at least two dry prepreg plies and applying pressure to the at least two dry prepreg plies with in mold form, where the heat applied is from 70C° to 260C°. The at least two dry prepreg plies are aligned within the mold form such that the pressure applied to the at least two dry prepreg plies presses the at least two dry prepreg plies into physical contact with each other.

The method may additionally include cooling the at least two dry prepreg plies with the mold form, and removing the at least two dry prepreg plies from the mold form after the dry prepreg plies have cooled to less than 70C° to form a molded article.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 illustrates a process for creating a dry prepreg of fibrous textile impregnated by a thermoplastic resin mixture;
FIG. 2 illustrates a thermoforming molding process using a stack of dry prepreg plies produced by the process shown in FIG. 1; and
FIG. 3 illustrates a process for joining sub-laminates into a finished article by thermoforming.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its scope. The invention is therefore to be limited only by the terms of the claims, along with the full scope of equivalents to which the claims are entitled.

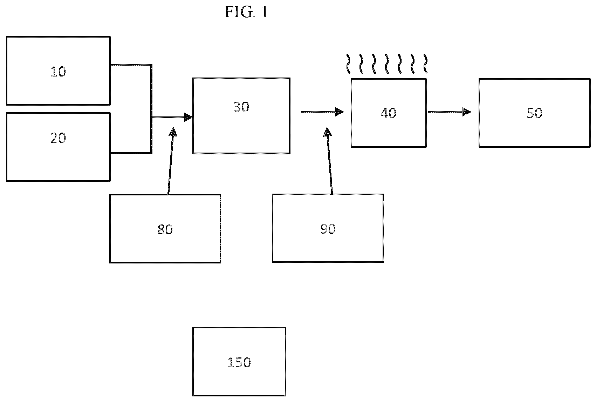

FIG. 1 shows a process for creating a dry prepreg made of a fibrous textile and a thermoplastic resin mixture which impregnates the fibrous textile.

The fibrous textile (10) may be free fibers or a fabric of fibrous textile (10). The fibrous textile (10) may form of woven or non-woven fibers or tows. The tows of the fibrous textile (10) may be, for example, unidirectionally aligned, 3-dimensionally woven, or 3-dimensionally braided.

The fibrous textile may include ceramic fibers. The fibrous textile may include fibers of, for example, silicon carbide (SiC), carbon (C), silicon oxycarbide (SiOC), silicon nitride (Si3N4), silicon carbonitride (SiCN), hafnium carbide (HfC), tantalum carbide (TaC), silicon borocarbide (SiBC), silicon borocarbonitride (SiBCN), Zirconium carbide (ZrC), silicon aluminum carbon nitride (SiAlCN), silica, alumina, mullite, garnet, aluminosilicate, arimad fiber, spectra, and basalt.

The fibers of the fibrous textile (10) may have different diameters. The fibers of the fibrous textile (10) can optionally be small diameter fibers with diameters of 8-15 microns, for example, 13 microns. The fibrous textile (10) can optionally be large fibers with diameters of 50 to 200 micron diameter, for example, nominal diameters of 120 microns.

Fibrous textile (10) may have an amorphous or crystalline structure and can include elements such as boron (B), carbon (C), nitrogen (N), titanium (Ti), or silicon (Si). Some acceptable fibers are commonly used in ceramic matrix composites under trade names such as NICALON^{®} SiC fibers, and TYRANNO^{®} for the smaller diameter fibers or SCS SiC fibers for the larger diameter fibers. Acceptable fibers of the fibrous textile (10) may include Si-C-O fibers, Si-Ti-C-O fibers, Si-Zr-C-O fibers, SiBN3C fibers, and silicon nitride (Si3N4) fibers. Ceramic oxide fibers may also be used. Ceramic Oxide fibers include oxide compounds, such as alumina (Al2O3), mullite (3Al2O3-2SiO2) such as 3M Nextel 610^{®} or Nextel 720°, and zirconia (ZrO2). Oxide fibers are generally polycrystalline.

The fibrous textile (10) is combined with a thermoplastic resin mixture (20). The Thermoplastic resin mixture (20) includes, for example, 5wt% to 60wt% PVB, or from 10wt% to 60wt% PVB or from 5wt% to 30wt% PVB or from 20wt% to 30wt% PVB or about 15wt% PVB. The resin mixture (20) also includes a solvent, for example, in an amount of about 40wt% - 80wt% or 55wt%-75wt%.

The solvent may be an alcohol solvent, for example, ethanol. The solvent may also be, for example, acetic acid, acetone, methanol, ethanol, 2-propanol, butanol, 2-butoxyethanol, cyclohexanone, benzyl alcohol, 1-methoxy-propanol-2, butyl glycol, n-butyl acetate, ethyl acetate, N,N-dimethylacetamide (DMA), N,N-dimethylformamide (DMF), N,N-dimethylsulfoxide (DMSO), N-methylpyrrolidone (NMP), and tetrahydrofurane (THF).

Optionally, various additives may also be included to form a prepreg composite material (30). For example, inorganic particles including SiC, copper fibers, boron carbide (B4C), Hafnium Diboride (HfB2), Ytterbium Oxide (Yb2O3), and Alumina (Al2O3). Organic or inorganic fillers may also be introduced for mechanical or thermal performance optimization. The additives or fillers may be included in various amounts, for example, 3wt%-20wt% or 5wt%-15wt%

While combining fibrous textile (10) with the thermoplastic resin mixture (20), backing films may be applied (80) to the outer surfaces of the combined fibrous textile (10) and thermoplastic resin mixture (20) to form a prepreg composite material (30). This prepreg composite material (30) is wet, solvated and highly flexible. A material in such condition would not generally be suitable for automated machine handling as it lacks rigidity.

As shown in FIG. 1, the solvent in the fibrous textile/thermoplastic resin wet prepreg composite material (30) is then removed (40), by for example, heating the prepreg composite material (30) to evaporate the solvent. For example, heat can be applied at 40°C to 90°C, for example, 60°C to 80°C, 70°C to 90°C, or 75°C to 85°C. Acceptable solvents can include, for example, alcohols such as ethanol.

Before removal of the solvent, the backing film is removed (90). After the removal of the solvent (40), a dry prepreg composite material (50) with a board like physical structure is formed. For example, a SiC textile/PVB prepreg in a rigid, dry, board like form. The resulting dry prepreg composite material (50) has less than 10% of solvent remaining, for example, less than 9%, less than 8%, less than 7%, less than 6%, less than 5%, less than 4%, less than 3%, less than 2%, less than 1%, less than 0.75%, less than 0.5%, or less than 0.25%. The resulting dry prepreg composite material (50) is rigid and in condition for use in a thermoforming process.

This dry prepreg composite material (50) has different physical properties compared to that of the wet prepreg composite material (30). Whereas the wet prepreg composite material (30) is highly flexible at room temperature, the dry prepreg composite material (50) has a rigid form and is dry. However, when heated to the appropriate temperature, for example, above about 70°C the dry prepreg composite material (50) becomes malleable and tacky.

The thermoplastics herein can be heated to an elevated temperature to become soft and pliable and can be solidified on cooling. Unlike with thermosetting materials, there is no cure mechanism when the material is heated. As such, the material can be repeatably heated and cooled to take advantage of the change in material behavior. In ambient conditions, the fibrous textile/thermoplastic prepreg (50) is in a dry, board like condition which is very amenable to cutting and handling using robotic methods. Ply shapes can then be robotically handled and placed on a mold form. Heating of the dry prepreg composite material (50) to change its physical properties can occur in temperature ranges of, for example, 70C° to 260C° or for example, 175C° to 235C°. Thermoplastic decomposition is avoided by controlling the upper temperature limit. For example, temperatures over 260C° can result in the onset of PVB decomposition.

The physical properties of the dry prepreg composite material (50) being non-tacky and rigid result in it being ideally physically suitable and having handling characteristics highly compatible with robotic handling methods which can include, for example, physically moving the dry prepreg composite material (50) around, cutting, shaping, or stamping the dry prepreg composite material (50) and involving the dry prepreg composite material (50) in various automated CMC preforming processes. Such capabilities are not suitable with wet prepreg composite material (30).

The dry prepregs also provide advantages in small geometry applications. For example, with flat patterns with fine features. When using a wet prepreg containing solvent, processing the material with fine details is difficult if not impossible. The wet prepreg fabric like material simply lacks the structural integrity for such processing.

The processing referred to herein includes for example, making fine cuts, for example, when cutting material to narrow widths, or at angles, such that the weave pattern of the fabric is no longer effective at holding a ply shape together. This generally begins to occur at lengths less than ~⅜ inch in a 16x16 5HS weave. The referred to processing also includes cutting with a laser, and stamping the material. All of these processes are made difficult with wet fabric material as it cannot be suitably handled and may be practically destroyed for its intended use. The dry prepregs address these handling issues and allow for fine detail processing of the material without substantial risk of compromising the material for its downstream uses, for example, for making a sub laminate or a final article for conversion to CMC.

A robotic handling device (150) may be used to handle the relevant material throughout the process depicted in FIG. 1. For example, the robotic handling device (150) may be used to handle the finished dry prepreg composite material (50) after the solvent has been removed. The robotic handling device may be more than one single device, with each device having a dedicated task, or may be a device that can handle multiple tasks.

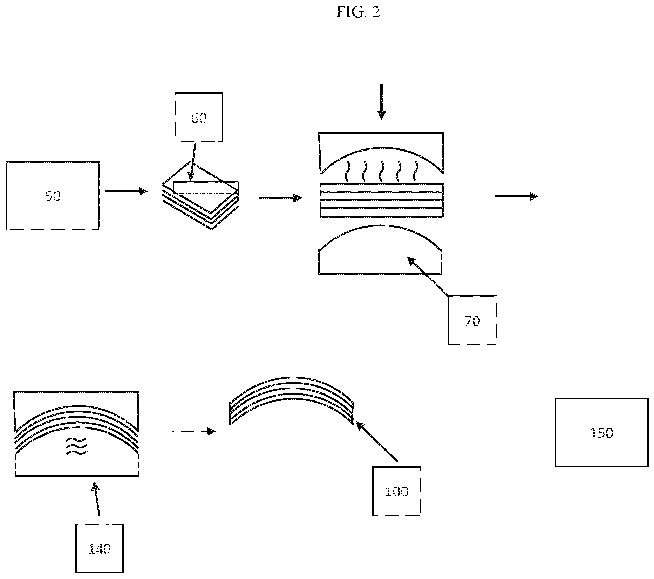

FIG. 2 shows the thermoforming of dry thermoplastic prepreg which is accomplished by stacking two or more plies onto a mold form and consolidating the plies by the application of a force. The dry prepreg composite material (50) can be stacked into layers where each ply of the stack (60) is a dry prepreg composite material (50). The consolidated stack (60) can then be heated and dwelled at a temperature above the softening point of thermoplastic in the dry prepreg composite material (50) to allow for the resin to soften and intermingle between layers of the stack (60) to occur. That is, the stack can be bonded together by applying heat which allows for softening and then intermingling of the thermoplastic in each ply of the stack (60) which allows the plies to bond to each other. The stack (60) of dry prepreg composite material (60) can be heated and/or reheated in a mold (70) where a force is applied to the heated stack (60) of dry prepreg composite material (50) to form it over the engineered mold form (70). The engineered mold form can be of various shapes of varying complexities.

The heated stack (60) of dry prepreg composite material (50) is then held in place (140) over the engineered mold form (70) such that the heated stack (60) of dry prepreg composite material (50) adopts the physical shape of the engineered mold form (70) such that, once the material and tool are cooled and the engineered mold form (70) is removed, the stack (60) of dry prepreg composite material (50) retains the shape of the engineered mold form (70) forming a molded article (100). Once cooled, the molded article (100) is a rigid material in the shape applied to it by the engineered mold form (70). The cooling occurs while the stack (60) of dry prepreg composite material (50) remains in the mold (70) such that when the stack (60) of dry prepreg composite material (50) is removed from the engineered mold form (70), the shape imparted by the engineered mold form (70) is retained in the form of a rigid structure.

The molding process using the engineered mold form (70) may be iterative. The same or multiple engineered mold forms (70) may be applied to the stack (60) of dry prepreg composite material (50) or only select portions of the stack (60) of dry prepreg composite material (50) to achieve the desired molded article (100). Additionally, intermediate processing may occur between moldings such as stamping or machining the stack (60) of dry prepreg composite material (50). Machining includes, for example, knife or scissor cutting, grinding, laser machining, etc. It is also envisioned that a single ply of dry prepreg composite material (50) rather than a stack (60) can be used in the above described processes.

The molding can occur in temperature ranges of, 70C° to 260C°, for example, 175C° to 235C°.

During the molding process, one or more solvents may optionally be reintroduced into the dry prepreg composite material (50) to put the material in a more flexible condition. This can enable more extreme bend angles. The application of the solvent may be done to the entire dry prepreg composite material (50) or only to a portion of the dry prepreg composite material (50). For example, if the desired molded article (100) comprised a 90° bend between two straight sections of material, a solvent could be applied only to the area of the dry prepreg composite material (50) which comprises the 90° bend. After the formation of the bend the solvent can be removed such that a fully dry prepreg composite material (50) in the form of a rigid molded article is produced or returned to its previous form, where in the latter case, the 90° bend would be maintained also in rigid physical form.

The molded article (100) may be a finalized article (130) or a sub-laminate (110).

A robotic handling device (150) may be used to handle the relevant material throughout the process depicted in FIG. 2. For example, the robotic handling device (150) may be used to handle and cut the dry prepreg composite material (50) and position the plies (60) in an engineered mold form (70). The robotic handling device (150) may also remove the cooled stack (60) from the engineered mold form (70) after it has been molded. Again, it is noted that the robotic handling device may be a single device or may be several devices, each dedicated to a certain task or tasks.

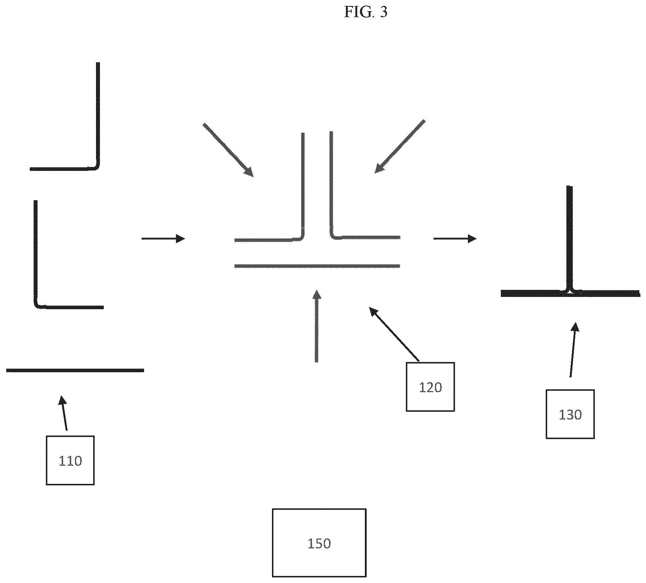

FIG. 3 shows a process forming a finalized article (130) from sub-laminates (110). Sub-laminates (110) may have been separately formed of dry prepreg composite material (50) or may also have been formed using the more traditional tacky wet prepreg. That is, FIG. 3 illustrates a process which occurs after sub-laminates (110) have been separately formed regardless of the method of their formation. The individual sub-laminates (110) can then be joined together in a joining step (120), for example, in a mold form (not shown) such that their outer surfaces contact each other. Heat and optionally a force can be applied to the individual sub-laminates (110) so that the thermoplastic in each sub-laminate (110) becomes soft and tacky and the begins to intermingle with the thermoplastic in each of the other sub-laminates (110). The joining step ends by allowing the laminates (110) to cool.

The mold is then removed and the finalized laminate (130) is formed where the thermoplastic acts as the binder holding together the individual sub-laminates (110) to form the finalized laminate (130). The finalized laminate (130) is rigid and has the same or similar properties the dry prepreg composite material (50).

The above process is well suited for automation where the sub-laminates (110) are handled by, for example, robotic equipment. The condition of the sub-laminates (110) when not in the mold are the same or similar to the dry prepreg composite material (50) meaning that sub-laminates (110) are dry and rigid and easy for or at least suitable for, for example, a robotic arm to handle.

The process allows for, for example, a robotic arm to select specific predetermined sub-laminates (110) from a group of the same shaped sub-laminates (110) or differently shaped sub-laminates (110) and appropriately position them in a suitable mold form (70). However, thermoforming of sub-laminates does not necessarily have to be accompanied by automation. The thermoforming of sub-laminates process described herein is advantageous with or without the use of automation as it doesn't require the re-wetting of the entire article to join the sub-laminates.

The joining step (120) will occur in the mold and when the finalized laminate (130) is released from the mold it is once again in condition to be optionally handled by the robotic arm which can move the finalized laminate (130) to storage or for some further processing step(s), for example a chemical vapor infiltration (CVI) process where the finalized laminate (130) can be used for making CMC.

For example, the thermoplastic in the finalized laminate (130) can act as an effective sacrificial tackifier for CMC applications by burning off the PVB prior to CVI processing and can be also utilized in a solvent-based tacky form by reintroduction of a solvent. The dry prepreg (50) material may also be resolvated at various times, for example, with ethanol, to transform the handling characteristics of the material, or only a part of the material may be resolvated into a more flexible fabric like material. As such, the dry prepreg's (50) physical characteristics can be changed as desired by adding or removing solvent from the material which is useful for efficient processing and automated handling or manual layup of complex shaped parts as needed.

The process described herein is an advantageous enabler for the expansion of automation into the CMC preforming process. Especially for less complex shaped preforms or sub-laminate (110) preforms, the preforming process can be fully automated. This level of automation can provide significant cost, consistency, and throughput improvements. It is difficult and impractical for machines, i.e., robots to handle material like that of a solvated wet prepreg (30). This material has little rigidity, and is generally robot handling unfriendly. The dry prepreg (50) offers substantially more favorable physical characteristics for automated handling and processing.

Thermoforming using sub-laminates (110) can also further enable the automated production of more complex parts, by first producing sub-laminates (110) from the baseline dry prepreg (50) or other known methods in the art and then joining them via thermoforming as described above. This process option can help to reduce costs, cycle time, and prevent fiber distortion which can occur when solvent is re-introduced into the system.

Thermoforming may also yield improved CMC microstructures as it introduces less opportunity for tow distortion and tow spreading to occur, both of which can lead to undesired variability in the preform microstructure and be potentially detrimental to matrix formation in a chemical vapor infiltration (CVI) process. By maintaining the prepreg (50) without substantial presence of a solvent, the viscosity of the dry prepreg (50), i.e., the viscosity of the thermoplastic, is greater than that of a wet prepreg, i.e., a prepreg (30) including a solvent, for example, ethanol.

Debulking of solvent based prepregs will induce some degree of tow spreading due to the lower viscosity of the solvated binder which allows the tows to spread when an external force is applied. For example, during the molding process, the lowered viscosity of the material allows the tows to spread out. Later, during the formation of the CMC, these spread out tows may lower the quality of the CMC produced by, for example, closing off the pathways between tows and impeding the chemical vapor infiltration process.

The nature of the dry prepreg (50) and the thermoforming process addresses the above issues. The thermoforming process only softens the binder, i.e., the thermoplastic. This results in a better-preserved tow shape and less spread-out organization of the tows. As such, the size of the pathways that exist in the fabric is maintained which results in improved and more consistent CMC microstructures and properties. For example, CVI is heavily reliant on the empty space between fibers, i.e., pathways. The spreading of fibers closes these pathways and makes it harder for CVI to get a desired amount of ceramic matrix to all areas around the fibers. The use of the dry prepreg (50) and thermoforming processes described herein with these dry prepregs (50) better maintains these pathways and thus yields more consistent and complete ceramic matrix around the fibers and thus higher quality CMC end products.

Further control of the thermoforming can be provided by using local heating where only portions of the dry prepreg are heated where the heated portions are those which are desired to be bent or portions of the dry prepreg of sub-laminates which are desired to be joined to other sub-laminates.

The combination of processes discussed within can also provide stable and storable intermediate structures which can be used as needed to prevent bottle necks in a greater manufacturing process. For example, the dry prepregs (50) can be produced and then stored until needed. In a separate sub-process, the dry prepregs (50) can then be formed in molded articles (100) or sub-laminates (110) and stored until needed. In a separate sub-process, the sub-laminates (110) can be formed into a finalized article (130). Each sub-process can be executed and automated independently of one another, which reduces the likelihood of bottle necks occurring and provides more and better-quality control as each subprocess can be independently assessed.

A robotic handling device (150), which may be one or more devices, may be used to handle the relevant material throughout the process depicted in FIG. 3. For example, the robotic handling device (150) may be used to handle and position the sub-laminates (110) as needed in a mold form to allow for a joining step to occur. The robotic handling device (150) may also be used to handle the resulting finalized articles (130) as needed.

Automation is especially advantageous when processing the dry prepregs (50). Such processing steps include the handling of the dry prepregs (50) and the subsequent cutting, handling, kitting of plies, and stacking the dry prepregs to create laminates or sub-laminates. The stacking of plies may also be included depending on the complexity of a given layup. Automation can be applied selectively to the process steps discussed herein and these particular process steps are particularly well suited for automation implementation as they can be immediately automated without any additional significant challenges.

Full automation of the preforming process may be achieved especially in situations concerning less complex molded articles (100) or finalized articles (130). Automating complex layups and the joining of sub-laminates could offer more significant challenges and could be dependent on the geometric complexity of the details of a particular embodiment. Any level of automation results in significant cost and throughput improvements.

The corresponding structures, materials, acts, and equivalents, and also equivalents of all means or steps plus function elements, if any, in the claims below are intended to include any structure, material, or act for performing the function in combination with other claimed elements as specifically claimed. The description of the embodiments described herein has been presented for purposes of illustration and description, but is not intended to be exhaustive or limited to the invention in the form disclosed. Many modifications and variations will be apparent to those of ordinary skill without departing from the scope and spirit of the invention. The embodiments were chosen and described in order to best explain the principles of the disclosed process and its practical applications, and to enable others of ordinary skill in the art to understand the disclosed process, including embodiments with various modifications as being suited to any particular uses contemplated.

Modifications and equivalents may be made to the features of the claims without departing from the spirit or scope of the invention. Thus, it is intended that the embodiments described herein cover the modifications and variations disclosed above provided that these changes come within the scope of the claims and their equivalents.

## Claims

1. A prepreg (50) comprising:
a fibrous textile (10); and
a thermoplastic resin mixture (20) comprising a thermoplastic polymer and a solvent (40), wherein the thermoplastic resin mixture (20) impregnates the fibrous textile (10),
wherein the prepreg (50) comprises 5 wt% to 30 wt% of a thermoplastic polymer and less than 5% percent of a solvent (40).

2. The prepreg of claim 1, wherein the fibrous textile (10) is a woven fabric, non-woven fabric, braid, or tows, optionally wherein said fibrous textile (10) is selected from the group consisting of unidirectional tape, a 2-dimensional woven fabric, a 3-dimensional woven fabric, a 2-dimensional braided fabric, and a 3-dimensional braided fabric.

3. The prepreg of claim 1 or 2, wherein the fibrous textile (10) comprises fibers selected from the group consisting of silicon carbide (SiC), carbon (C), silicon oxycarbide (SiOC), silicon nitride (Si3N4), silicon carbonitride (SiCN), hafnium carbide (HfC), tantalum carbide (TaC), silicon borocarbide (SiBC), silicon borocarbonitride (SiBCN), Zirconium carbide (ZrC), silicon aluminum carbon nitride (SiAICN), silica, alumina, mullite, garnet, aluminosilicate, arimad fiber, spectra, and basalt.

4. The prepreg of any preceding claim, wherein the thermoplastic is selected from the group consisting of polyvinyl butyral (PVB), Polylactic acid (PLA), Acrylonitrile butadiene styrene (ABS), Polyvinyl chloride (PVC), and Acrylonitrile styrene acrylate (ASA).

5. The prepreg of any preceding claim, wherein the thermoplastic is PVB and the fibrous textile (10) is comprised of ceramic fiber tows.

6. A stack (60) of prepreg plies, comprising a plurality of the prepregs (50) of any preceding claim, optionally wherein the stack (60) of prepreg plies are joined together by intermingling of the thermoplastic resin mixture (20), optionally PVB resin, of adjacent prepreg plies (50) in the stack (60).

7. A method for making a dry prepreg (50) comprising:
combining a fibrous textile (10) with a thermoplastic resin mixture (20) wherein the thermoplastic resin mixture (20) comprises 15 wt% to 60 wt% of a thermoplastic, and at least 30 wt% of a solvent (40); and
removing the solvent (40) from the combined fibrous textile (10) with a thermoplastic resin mixture (20) wherein the remaining wt% of solvent (40) is less than 5%, to form at least one dry prepreg (50).

8. The method of claim 7, stack (60) of prepreg plies of claim 6 or prepreg (50) of any of claims 1 to 5, wherein the thermoplastic is PVB and the fibrous textile (10) is comprised of SiC fiber tows.

9. The method, stack (60) or prepreg (50) of any preceding claim, wherein the solvent (40) is ethanol.

10. The method of any of claims 7 to 9, wherein at least two dry prepregs plies (50) are formed and are stacked on top of each other.

11. The method of any of claims 7 to 10, further comprising:
positioning the at least one dry prepreg ply (50) in a mold form (70) with a predetermined interior shape; and
molding the at least one dry prepreg ply (50) by applying heat and pressure to the at least one dry prepreg ply (50) within the mold form (70) at least until the dry prepreg (50) adopts the predetermined interior shape of the mold form (70).

12. The method of claim 11, wherein the heat applied is at a temperature of 70C° to 260C°.

13. The method of claim 11 or 12, additionally comprising:
cooling the dry prepreg (50) with the mold form (70); and
removing the dry prepreg (50) from the mold form (70) after the dry prepreg (50) has cooled to less than 70C° to form a molded article (100).

14. The method of claim 10 or any of claims 11 to 13 as dependent on claim 10, directly or indirectly, further comprising:
positioning the at least two stacked dry prepreg plies (50, 60) in a mold form (70) with a predetermined interior shape; and
molding the stacked dry prepreg plies (50, 60) by applying heat and pressure to the stacked dry prepreg plies (50, 60) within the mold form (70) until the dry prepreg plies (50, 60) adopt the predetermined interior shape of the mold form (70).

15. A method comprising:
thermoforming together at least two dry prepreg plies (50) wherein said at least two dry prepreg plies (50) each comprise:
a fibrous textile (10); and
a thermoplastic resin mixture (20), which impregnates the fibrous textile (10) forming a dry prepreg (50),
wherein the dry prepreg (50) comprises 5 wt% to 30 wt% polyvinyl butyral and less than 5% percent of a solvent (40),
wherein said thermoforming comprises:
heating the at least two dry prepreg plies (50) and applying pressure to the at least two dry prepreg plies (50) with a mold form (70), wherein the heat applied is from 70C° to 260C°; and
wherein the at least two dry prepreg plies (50) are aligned within the mold form (70) such that the pressure applied to the at least two dry prepreg plies (50) presses the at least two dry prepreg plies (50) into physical contact with each other,
optionally, wherein the method additionally comprises:
cooling the at least two dry prepreg plies (50) with the mold form (70); and
removing the at least two dry prepreg plies (50) from the mold form (70) after the dry prepreg plies (50) have cooled to less than 70C° to form a molded article (100).
